# EUROPEAN PATENT APPLICATION

(11) **EP 4 470 940 A1**
(43) Date of publication of application: **04.12.2024**
(21) Application number: 23746899.6
(22) Date of filing: 23.01.2023
(51) Int. Cl.: B65D 85/28, C09D 11/17

(54) **STATIONERY PACKAGING**

(30) Priority: 28.01.2022 JP 2022012074
(71) Applicant: Kabushiki Kaisha Pilot Corporation (also trading as Pilot Corporation), Tokyo 104-8304 (JP)
(72) Inventor: SATO, Miyu, Tokyo 104-8304 (JP)
(74) Representative: Hoffmann Eitle
(86) International application number: PCT/JP2023/001920
(87) International publication number: WO 2023/145687

(57) **Abstract**

A stationery packaging capable of housing stationery includes a paper base material and a heat seal layer provided on the paper base material.

## Description

### TECHNICAL FIELD

The present invention relates to a stationery packaging.

### BACKGROUND ART

Conventionally, it is well known that a commodity is sold by being wrapped in packaging film made from transparent plastic material for the purpose of displaying description about the commodity or because of a style of selling in a shop.

However, shapes and sizes of commodities vary widely. Sizes of stationery and the like are mostly small as a whole, but shapes thereof are various. Even if types of the commodities are the same, each commodity is differentiated from the other commodity of another company by its shape. Among them, there are a large number of commodities having irregular shapes such as writing tools having a long shape, and being hard and integrated with a clip, a cap, and the like, so that packaging film made from plastic material is mainly used in view of ease of packaging, cost, and the like (Patent Documents 1 to 3).

### CITATION LIST

### Patent Literature

Patent Document 1: Japanese Patent Application Laid-open No. 2012-166823
Patent Document 2: Japanese Patent Application Laid-open No. 2006-182403
Patent Document 3: Japanese Patent Application Laid-open No. 2019-202811

### SUMMARY OF INVENTION

### PROBLEM TO BE SOLVED BY THE INVENTION

In recent years, a problem of plastic refuse flowing out to the ocean significantly attracts attention. While efforts for global environmental problems have been made by refraining from using plastic materials that is assumed to be disposable, not only members constituting stationery but also packaging bodies therefor are required to be made without plastics.

In view of such a problem, it can be considered to use wrapping materials made of paper. However, in a case of selling a stationery commodity housed in a stationery packaging by hanging, when leakage of a liquid material such as ink for writing tools (ink leakage) is caused due to an impact of unexpected falling, there is a concern that the ink may seep through a paper base material, so that there is a demand for a stationery packaging that has durability and can prevent ink from leaking out.

An object of the present invention is to provide a stationery packaging that reduces influence on the environment, and suppresses leakage of a liquid material such as ink for writing tools from leaking out to the outside (ink leakage).

### MEANS FOR SOLVING PROBLEM

For solving the above-described problem, the present invention includes the following.
"1. A stationery packaging capable of housing stationery, the stationery packaging comprising:
   a paper base material; and
   a heat seal layer provided on the paper base material.
2. The stationery packaging according to the item 1, wherein the heat seal layer is provided on at least one of a front surface and a back surface being two opposed surfaces of the paper base material.
3. The stationery packaging according to the item 1 or 2, wherein
   the paper base material is formed in a bag shape in which a surface of the paper base material where the heat seal layer is provided is an inner peripheral surface being partially fused, and
   the heat seal layer is provided in at least a fused region fused in the paper base material.
4. The stationery packaging according to any one of the items 1 to 3, wherein
   the stationery packaging
      is formed in a bag shape in which a surface of the paper base material where the heat seal layer is provided is an inner peripheral surface being partially fused, and
      includes a decorative region whose outer peripheral surface is decorated, and
   an area of a covering decorative region covering the stationery housed in a stationery housing part is equal to or smaller than 70% of a projection area obtained by parallel projection of the stationery housed in the stationery housing part on the outer peripheral surface, the stationery housing part being an inner space of the bag-shaped stationery packaging and configured to house the stationery.
5. The stationery packaging according to any one of the items 1 to 4, wherein a projection area of the stationery is equal to or larger than 20% of an area of parallel projection of the stationery packaging in a thickness direction of the paper base material.
6. The stationery packaging according to any one of the items 1 to 5, wherein the heat seal layer contains a bioplastic.
7. The stationery packaging according to any one of the items 1 to 6, wherein the stationery includes at least a bioplastic material and a recycled material as components constituting the stationery.
8. The stationery packaging according to any one of the items 1 to 7, wherein the stationery is thermochromic stationery including thermochromic ink.
9. The stationery packaging according to any one of the items 1 to 8, wherein the stationery is a writing tool.
10. The stationery packaging according to the item 9, wherein ink viscosity of an ink composition for writing tool housed in the writing tool is equal to or smaller than 30000 mPa·s under 20°C environment at a shear rate of 1.92 sec⁻¹.
11. The stationery packaging according to the item 9 or 10, wherein the ink composition for writing tool housed in the writing tool contains an ink leakage preventing agent."

### EFFECT OF THE INVENTION

The present invention provides a stationery packaging that reduces influence on the environment, and prevents a liquid material such as ink for writing tools from leaking out to the outside (ink leakage).

### BRIEF DESCRIPTION OF DRAWINGS

FIG. 1 is an external view illustrating a stationery packaging according to an embodiment.
FIG. 2 is an enlarged cross-sectional view of an A-A cross section in FIG. 1.
FIG. 3 is a B-B cross-sectional view in FIG. 2.

### DESCRIPTION OF EMBODIMENTS

The present invention is characterized by a stationery packaging that houses stationery, and the packaging includes a heat seal layer provided on a paper base material.

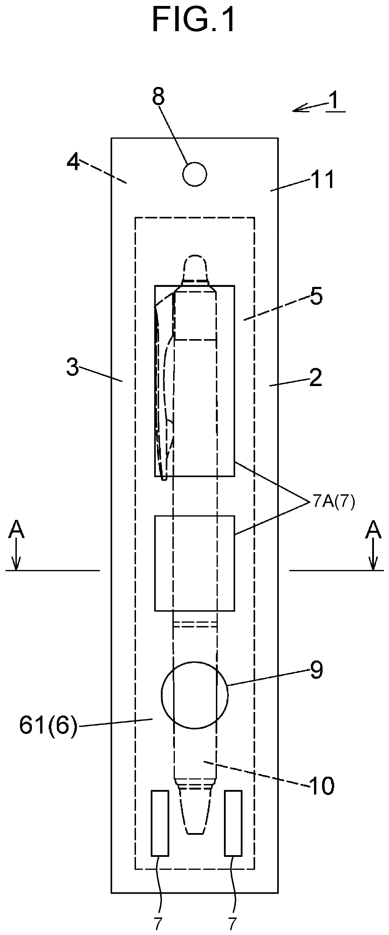

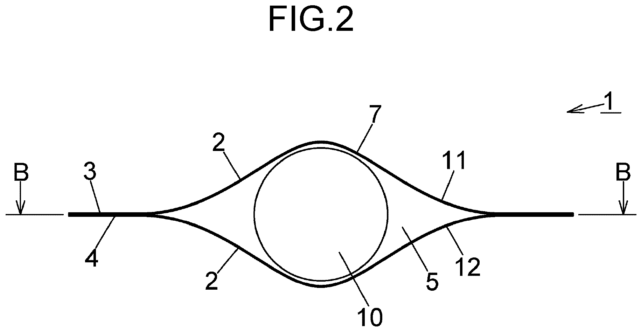

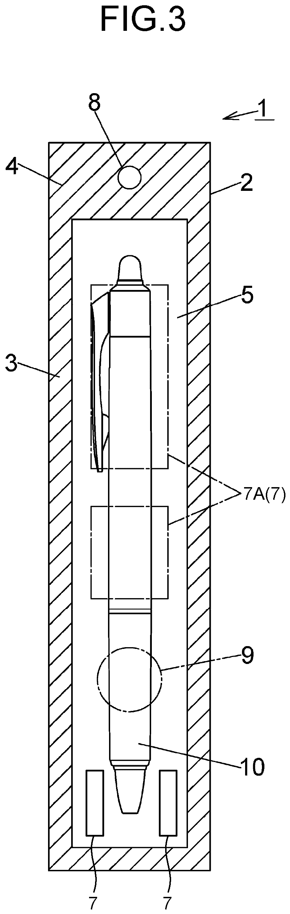

FIG. 1 is a schematic diagram of an example of a stationery packaging 1 according to the present embodiment. FIG. 2 is an A-A cross-sectional view in FIG. 1. FIG. 3 is a B-B cross-sectional view in FIG. 2.

The stationery packaging 1 according to the present embodiment is a packaging that is capable of housing stationery 10. The stationery packaging 1 includes a paper base material 2 and a heat seal layer 4 that is provided on the paper base material 2.

The heat seal layer 4 is a layer that provides heat seal suitability. Specifically, the heat seal layer 4 is a layer that is fused by being heated and pressurized, and that can adhere to an adhesion target.

The heat seal layer 4 is provided on at least one of a front surface and a back surface as two opposed surfaces of the one paper base material 2. Specifically, in the stationery packaging 1, the paper base material 2 is formed in a bag shape in which a surface of the paper base material 2 where the heat seal layer 4 is provided is an inner peripheral surface being partially fused. Heat seal layers 4 may be provided on both of an inner peripheral surface side and an outer peripheral surface side of the paper base material 2 of the bag shape. The heat seal layer 4 is preferably provided only on the inner peripheral surface side of the paper base material 2 of the bag shape in consideration of productivity and storage performance after packaging.

In FIG. 1 to FIG. 3, an example of a configuration is illustrated, in which the stationery packaging 1 includes a pair of the paper base materials 2 having a rectangular shape, and the heat seal layers 4 are respectively provided on opposed surfaces of the paper base materials 2. In the stationery packaging 1, the paper base material 2 may be formed in the bag shape by curving or bending one paper base material 2 to be folded back, and being partially fused.

The heat seal layer 4 may be provided at least in a fused region 3 being fused in the paper base material 2 of the bag shape. The heat seal layer 4 may be provided at least in the fused region 3 as a sealed region when the bag shape is made on at least one of the front surface and the back surface of the paper base material 2.

On the outer peripheral surface or the inner peripheral surface of the paper base material 2 configured in the bag shape, an ultraviolet protective layer may be provided. The ultraviolet protective layer is selected in consideration of weather resistance, heat resistance, UV resistance, adhesiveness with respect to the paper base material and the heat seal layer 4, and the like, in addition to an ultraviolet absorptive property, and a coloring agent may be further added thereto for the purpose of giving designability.

On the outer peripheral surface of the stationery packaging 1 configured in the bag shape, a decorated decorative region 7 may be provided. The decorative region 7 is a decorated region on the outer peripheral surface of the stationery packaging 1.

A method for forming the decorative region 7 is not limited. For example, the decorative region 7 can be formed by attaching a seal, by printing, and the like on the outer peripheral surface of the stationery packaging 1, but is preferably formed by printing in consideration of environmental protection.

In a case of forming the decorative region 7 by printing, it is preferable to form a desired printing pattern such as characters, figures, symbols, patterns, and the like by using a normal coating method, a printing method, or the like. For the printing, a printing scheme such as gravure printing, offset printing, relief printing, screen printing, transfer printing, and flexographic printing can be used.

An area of a covering decorative region 7A in the decorative region 7 is preferably equal to or smaller than 70% of a projection area of the stationery 10 housed in a stationery housing part 5 projected on the outer peripheral surface of the stationery packaging 1 in parallel.

The stationery housing part 5 refers to an inner space of the stationery packaging 1 of the bag shape and a space in which the stationery 10 is housed.

The covering decorative region 7A is a region that covers the stationery 10 housed in the stationery housing part 5 in the decorative region 7 formed on the outer peripheral surface of the stationery packaging 1. In other words, the covering decorative region 7A is a region overlapping with the stationery 10 housed in the stationery housing part 5 when the stationery packaging 1 is visually recognized in a thickness direction of the paper base material 2 of the stationery packaging 1 in the decorative region 7 formed on the outer peripheral surface of the stationery packaging 1. Specifically, the covering decorative region 7A is a region overlapping with the stationery 10 at the time when the decorative region 7 is projected onto the stationery 10 housed in the stationery housing part 5 in parallel in the decorative region 7 formed on any of one surface 61 and another surface, which are opposed to each other, of the stationery packaging 1 configured in the bag shape and a rectangular shape. Parallel projection means that an object is two-dimensionally projected in parallel as it is. The parallel projection may also be called orthogonal projection.

The projection area obtained by projecting the stationery 10 housed in the stationery housing part 5 onto the outer peripheral surface of the stationery packaging 1 in parallel may be hereinafter called a projection area of the stationery 10. The projection area of the stationery 10 is an area represented by placing the stationery 10 on a plane and projecting it in parallel from an upper side.

Incidentally, in a case of a paper package, the housed object inside cannot be visually recognized from the outside, and the object housed inside needs to be checked by an X-ray sensor. However, when the area of the covering decorative region 7A at a position opposed to the stationery 10 housed in the stationery housing part 5 exceeds the range described above, it is difficult to check content when whether the stationery 10 is housed in the stationery packaging 1 is checked by an X-ray sensor from the outside. Due to this, it becomes difficult to determine presence/absence of content or whether the stationery 10 as a target is housed.

On the other hand, when the area of the covering decorative region 7A is equal to or smaller than 70% of the projection area of the stationery 10, it is easy to check the stationery 10 as the content.

Moreover, considering that the content can be easily checked by the X-ray sensor, the area of the covering decorative region 7A is preferably equal to or smaller than 60% of the projection area of the stationery 10, preferably equal to or smaller than 50% thereof, and preferably equal to or smaller than 40% thereof.

Additionally, the projection area of the stationery 10 is preferably equal to or larger than 20% of an area of parallel projection of the stationery packaging 1 in the thickness direction of the paper base material 2.

The thickness direction of the paper base material 2 agrees with a laminating direction of the paper base material 2 in the stationery packaging 1 that is configured in the bag shape by overlapping with a pair of the paper base materials 2, or bending or curving the one paper base material 2 to be folded back. Thus, the area of parallel projection of the stationery packaging 1 in the thickness direction of the paper base material 2 is an area of parallel projection of the stationery packaging 1 in the laminating direction of the paper base material 2 in the stationery packaging 1 that is configured in the bag shape by overlapping with a pair of the paper base materials 2, or bending or curving the one paper base material 2 to be folded back. Specifically, the area of parallel projection of the stationery packaging 1 in the thickness direction of the paper base material 2 corresponds to an area of the front surface or the back surface of the paper base material 2 in a case of the stationery packaging 1 having a configuration in which the pair of paper base materials 2 are arranged to be opposed to each other as illustrated in FIG. 1.

It is because, if the projection area of the stationery 10 is too small as compared with the area of parallel projection of the stationery packaging 1 in the thickness direction of the paper base material 2, it is difficult to find a position where the stationery 10 is internally present from the outside of the stationery packaging 1, and difficult to check the content in the stationery packaging 1 by the X-ray sensor and the like. Additionally, it is because the content in the stationery packaging 1 tends to be erroneously recognized, value of a commodity such as the content tends to be influenced, and unnecessary paper is required. With more consideration, the projection area of the stationery 10 described above is preferably equal to or larger than 25%, and preferably equal to or larger than 30% of the area of parallel projection of the stationery packaging 1 in the thickness direction of the paper base material 2.

Moreover, in the stationery packaging 1, at least one of a hanging hole 8 and a window part 9 is preferably provided.

By providing the hanging hole 8, the stationery packaging 1 can be easily displayed. Specifically, by providing the hanging hole 8 on the stationery packaging 1 to be able to be displayed in a shop, and inserting the hanging hole 8 through a display stand, the stationery packaging 1 can be configured to be able to be displayed while being hung on the display stand.

The window part 9 is a region in which the stationery housing part 5 can be visually recognized from the outside of the stationery packaging 1. By providing the window part 9, the content such as the stationery 10 housed in the stationery packaging 1 can be easily visually recognized from the outside, and the content can be prevented from being erroneously recognized. In a case where the stationery 10 that is visually recognized through the window part 9 is a writing tool, an identification part capable of identifying the same color as ink color is preferably provided on the writing tool. Specifically, if the ink color is blue, the ink color of the writing tool can be identified from the outside of the stationery packaging 1 by causing, to be blue, part of the writing tool (a shaft tube, a grip part, and the like of the writing tool) that can be visually recognized through the window part 9. A configuration can be made such that a difference in ink color of the housed stationery 10 can be identified from the outside by using the same stationery packaging 1. To improve visibility, multiple window parts 9 are preferably provided on the stationery packaging 1.

Next, the following describes component materials of respective parts constituting the stationery packaging 1 in detail.

### (Paper base material)

In the present invention, by using the paper base material 2, the stationery packaging 1 can reduces influence on the environment and is friendly to the global environment. With the paper base material 2, the stationery 10 can be tried out (for example, test writing, test painting, and the like can be performed with the stationery 10) differently from a film material, so that an effect of enabling effective use of the paper base material 2 can be exhibited. The thickness of the paper base material 2 is not limited. In consideration of prevention of damage on the paper base material, leakage of a liquid material such as ink for writing tools to the outside (ink leakage), and productivity of a paper package, the thickness of the paper base material 2 is preferably, for example, between 60 µm and 115 µm inclusive, between 65 µm and 100 µm inclusive, or between 80 µm and 90 µm inclusive.

The paper base material 2 is a sheet mainly made from pulp, and is obtained by further making paper from a paper material including a filler, various aids, and the like.

As the pulp, it is possible to use chemical pulp such as hardwood bleached kraft pulp (LBKP), softwood bleached kraft pulp (NBKP), hardwood unbleached kraft pulp (LUKP), softwood unbleached pulp (NUKP), and sulfite pulp, mechanical pulp such as stone-ground pulp and thermo-mechanical pulp, wood fibers such as deinked pulp and waste paper pulp, and non-wood fibers obtained from a kenaf, a bamboo, a hemp, and the like, and they can be appropriately compounded to be used. Out of these materials, it is preferable to use mechanical pulp and chemical pulp of wood fibers, and more preferable to use chemical pulp because foreign substances are hardly mixed into the paper base material 2, discoloration hardly occurs over time at the time of recycling use as a waste paper raw material, and surface feeling at the time of printing is favorable due to high whiteness and value in use is increased particularly in a case of use as a wrapping material. Specifically, a compounding amount of the chemical pulp such as LBKP and NBKP with respect to the entire pulp is preferably equal to or larger than 80%, and, more preferably, the compounding amount of the chemical pulp is 100%.

As the filler, it is possible to use a well-known filler such as an inorganic filler such as talc, kaolin, calcined kaolin, clay, heavy calcium carbonate, light calcium carbonate, white carbon, zeolite, magnesium carbonate, barium carbonate, titanium dioxide, zinc oxide, silicon oxide, amorphous silica, aluminum hydroxide, calcium hydroxide, magnesium hydroxide, zinc hydroxide, barium sulfate, and calcium sulfate, an organic filler such as urea-formalin resins, polystyrene resins, phenolic resins, and micro hollow particles. Note that the filler is not an essential material, and is not required to be used.

As the various aids, it is possible to exemplify a sizing agent such as rosin, alkyl ketene dimer (AKD), and alkenyl succinic anhydride (ASA), a dry paper strengthening agent such as a polyacrylamide-based polymer, a polyvinyl alcohol-based polymer, cationic starch, various kinds of modified starch, a urea-formalin resin, and a melamine-formalin resin, a wet paper strengthening agent, a retention aid, a freeness improving agent, a coagulant, aluminum sulfate, a bulking agent, a dye, a fluorescent brightening agent, a pH adjuster, an antifoaming agent, an ultraviolet inhibitor, a fading inhibitor, a pitch controlling agent, a slime controlling agent, and the like, and they can be appropriately selected to be used as needed.

The surface of the paper base material 2 may be treated with various agents. As the agent, it is possible to exemplify oxidized starch, hydroxyethyl-etherified starch, enzymatically modified starch, polyacrylamide, polyvinyl alcohol, a surface sizing agent, a waterproofing agent, a water-retaining agent, a thickener, a lubricant, and the like, and each of which can be singly used, or two or more of them can be mixed to be used. Moreover, these various agents may be used in combination with a pigment. As the pigment, it is possible to singly use an inorganic pigment such as kaolin, clay, engineered kaolin, delaminated clay, heavy calcium carbonate, light calcium carbonate, mica, talc, titanium dioxide, barium sulfate, calcium sulfate, zinc oxide, silicic acid, silicate, colloidal silica, and satin white, and an organic pigment of a dense type, a hollow type, or a core shell type, or two or more of them can be mixed to be used.

Although a basis weight of the paper base material 2 can be appropriately selected depending on various kinds of desired quality, handleability, and the like, it is preferably equal to or smaller than 600 g/m². With the basis weight in this range, the paper base material 2 is not damaged even in a case of housing, as the stationery 10, writing tools such as a ballpoint pen, a marking pen, a fountain pen, extra refills, a pencil, a mechanical pencil, and extra lead refills for a mechanical pencil, and stationery such as an eraser, a stamp, glue, tape, and a ruler, and prevents a liquid material such as ink for writing tools from leaking out to the outside (ink leakage), so that it can be preferably used. Moreover, the basis weight of the paper base material 2 is preferably equal to or smaller than 300 g/m². The basis weight falling within the range described above is preferable because the heat seal layer 4 can be easily provided on the paper base material 2.

In order to prevent damage and prevent a liquid material from leaking out to the outside (ink leakage), density of the paper base material 2 is preferably between 0.5 g/cm³ and 1.0 g/cm³ inclusive.

The paper base material 2 may be achromatic (uncolored) or chromatic (colored), but is preferably achromatic. This is because, as described above, when checking whether the stationery 10 is housed in the stationery packaging 1 by the X-ray sensor, it may be difficult to check the content due to a coloring agent in the paper base material 2 if the paper base material 2 is chromatic. Additionally, a mistake is easily made in determining whether target stationery is housed, for example. With more consideration, the paper base material 2 is preferably uncolored.

### (Heat seal layer)

As described above, the heat seal layer 4 is a layer that can be fused by being heated and pressurized, and can adhere to an adhesion target. By using the heat seal layer 4 to seal the stationery packaging 1 by fusing, it is possible to suppress leakage of a liquid material such as ink for writing tools included in the stationery 10 contained in the stationery packaging 1 to the outside (ink leakage).

More specifically, the stationery packaging 1 includes the heat seal layer 4 having heat seal suitability, so that it is easy to form a packaging form, maintain a shape, and secure airtightness in packaging use for writing tools such as a ballpoint pen, a marking pen, a fountain pen, extra refills, and a pencil, and stationery such as a stamp, glue, tape, and a ruler. Additionally, it can be packaged and opened more easily.

The heat seal layer 4 can also improve a sealing property and airtightness, and can easily suppress leakage of a liquid material to the outside (ink leakage). In consideration of the airtightness, the heat seal layer 4 is preferably provided on three or more sides of end parts of the paper base material 2 of the bag shape, and more preferably provided on four sides thereof. In a case of shipping multiple stationery packaging bodies 1 all together, it is preferable that the heat seal layer 4 does not peel off and is durable even when the stationery packaging bodies 1 are bound with a binding material (a rubber band and the like).

The heat seal layer 4 may be made with polyolefin such as polyethylene (PE) and polypropylene (PP), but preferably contains a bioplastic due to surrounding environments in recent years. This is because, a stationery packaging that reduces influence on the environment and is friendly to the global environment can be obtained by using a bioplastic, and it can be easily packaged and opened. Moreover, as described above, even in a case where leakage of a liquid material such as ink for writing tools to the outside (ink leakage and the like) occurs due to an impact of unexpected falling of the stationery 10 housed in the stationery packaging 1, the ink hardly seeps to the outside, and the ink hardly leaks out to the outside.

Examples of the bioplastic include a biomass plastic and a biodegradable plastic, and the biodegradable plastic is preferably used.

As the biodegradable plastic, it is possible to use an aliphatic polyester resin, an aliphatic-aromatic polyester resin, an alicyclic polyester resin, an aromatic polyester resin, and the like. Among these, in consideration of a sealing property, the aliphatic polyester resin is preferable, and polyhydroxyalkanoate is preferable. In more consideration of the sealing property and leakage of a liquid material to the outside (ink leakage), polyhydroxybutyrate is preferable, and poly-3-hydroxybutyrate-3-hydroxyhexanoate is preferable. One of them may be singly used, or two or more of them may be used in combination.

Moreover, in a case of shipping multiple stationery packaging bodies 1 all together, the bioplastic as described above is preferably used because it does not peel off and is durable even when the stationery packaging bodies 1 are bound with a binding material (a rubber band and the like).

A method for coating the heat seal layer 4 is not particularly limited, and coating can be performed with a well-known coating device and coating system.

For example, as the coating device, exemplified are a blade coater, a bar coater, an air knife coater, a curtain coater, a spray coater, a roll coater, a reverse roll coater, a size press coater, a gate roll coater, and the like. As the coating system, water-based coating using a solvent such as water, a solvent-based coating using a solvent such as an organic solvent, and the like are exemplified. Heat sealing paper according to the present invention may be used by contacting foods and the like, so that water-based coating is preferable in view of food safety.

A coating amount (dry weight) of the heat seal layer 4 is preferably between 1 g/m² and 30 g/m² inclusive. This is because the heat seal suitability tends to be lowered when the coating amount is smaller than 3 g/m², and the heat seal suitability is hardly improved and cost is increased even when the coating amount exceeds 20 g/m². With more consideration, the coating amount is preferably between 3 g/m² and 20 g/m² inclusive.

The heat seal layer 4 may be one layer, or may be constituted of two or more multiple layers. In a case of constituting the heat seal layer 4 with two or more multiple layers, it is preferable to cause a total coating amount of all the heat seal layers 4 to fall within the range described above.

To fix and stabilize the paper base material 2 and the heat seal layer 4, an adhesive agent is preferably used. The adhesive agent may be mixed with a biodegradable resin and the like to be the heat seal layer 4. The stationery packaging 1 according to the present invention includes the adhesive agent, so that the heat seal layer 4 can adhere onto the paper base material 2, and it is possible to easily obtain the uniform stationery packaging 1 on which a crack, a pinhole, and the like are suppressed.

The adhesive agent is not particularly limited so long as it can be dissolved or dispersed in water and can bond these parts. For example, as the adhesive agent, exemplified are polyvinyl alcohols such as fully saponified polyvinyl alcohol, partially saponified polyvinyl alcohol, acetoacetylated polyvinyl alcohol, carboxy-modified polyvinyl alcohol, amide-modified polyvinyl alcohol, sulfonic acid-modified polyvinyl alcohol, butyral-modified polyvinyl alcohol, olefin-modified polyvinyl alcohol, nitrile-modified polyvinyl alcohol, pyrrolidone-modified polyvinyl alcohol, silicone-modified polyvinyl alcohol, other modified polyvinyl alcohol, and an ethylene-vinyl alcohol copolymer, starches such as oxidized starch, etherified starch, and esterified starch, cellulose derivatives such as hydroxymethyl cellulose, hydroxyethyl cellulose, methyl cellulose, ethyl cellulose, carboxymethyl cellulose, acetyl cellulose, and nano-cellulose, a partially saponified ethylene-vinyl acetate copolymer, styrene-butadiene copolymer latex, conjugated diene-based polymer latex of methyl methacrylate-butadiene copolymer, acrylic-based polymer latex, styrene-maleic anhydride copolymer latex, polyvinyl chloride latex, polyvinyl acetate latex, and the like, and one or more of them can be appropriately selected to be used.

Among these, the adhesive agent preferably includes at least one component selected from the group consisting of polyvinyl alcohols, starches, cellulose derivatives, a partially saponified ethylene-vinyl acetate copolymer, styrene-butadiene copolymer latex, conjugated diene-based polymer latex of methyl methacrylate-butadiene copolymer, and acrylic-based polymer latex, and is more preferably constituted of at least one component selected from this group. Due to biodegradability thereof, the adhesive agent preferably includes at least one component selected from the group consisting of polyvinyl alcohols, starches, cellulose derivatives, and a partially saponified ethylene-vinyl acetate copolymer, and more preferably includes at least one component selected from the group consisting of fully saponified polyvinyl alcohol, partially saponified polyvinyl alcohol, and a partially saponified ethylene-vinyl acetate copolymer.

In a case of shipping multiple stationery packaging bodies 1 all together, the adhesive agent as described above is preferably used because it does not peel off and is durable even when the stationery packaging bodies 1 are bound with a binding material (a rubber band and the like).

### (Stationery)

As the stationery 10 housed in the stationery packaging 1, writing tools such as a ballpoint pen, a marking pen, a fountain pen, extra refills, a pencil, a mechanical pencil, and extra lead refills for a mechanical pencil, and stationery such as an eraser, a stamp, glue, tape, and a ruler can be exemplified.

As the stationery 10 housed in the stationery packaging 1, one or more pieces of stationery may be housed, different kinds of the stationery 10 may be housed as a stationery set, or different ink colors may be included as a writing tool set.

The stationery 10 housed in the stationery packaging 1 preferably contains a bioplastic material or a recycled material as a main body of the stationery (for example, a shaft tube of the writing tool, a clip part, a refill, and the like) and a component constituting the stationery to reduce influence on the environment and to be friendly to the global environment.

Moreover, it is preferable to house thermochromic stationery (a writing tool, a stamp, and the like) because, with the thermochromic stationery 10 using a thermochromic ink composition, when writing or printing is performed on a sheet surface, a color can be erased by applying heat and the paper base material can be reused.

A volume of the stationery 10 is preferably equal to or larger than 20% of a volume of the stationery housing part 5 of the stationery packaging 1. This is because, if the volume of the stationery 10 is too small as compared with the volume of the stationery housing part 5, the stationery tends to be easily moved and damaged at the time of moving or falling, and unnecessary paper is required. With more consideration, the volume of the stationery 10 is preferably equal to or larger than 30%, preferably equal to or larger than 50%, and preferably equal to or larger than 60%.

The volume of the stationery housing part 5 refers to a volume of a space that is made when the stationery 10 is sealed inside the paper base material 2 by fusion sealing of the heat seal layer 4.

There is a concern that, when the stationery 10 housed in the stationery packaging 1 is hung for sale as a commodity, leakage of a liquid material such as ink for writing tools (ink leakage) may be caused due to an impact of unexpected falling, and the ink may seep to the outer peripheral surface side of the paper base material 2.

If ink viscosity of the ink composition for writing tools included in the stationery 10 is too low, an effect of suppressing leakage of a liquid material to the outside (ink leakage) tends to be influenced. Due to this, the ink viscosity of the ink composition for writing tools included in the stationery 10 under 20°C environment at a shear rate of 1.92 sec⁻¹ is preferably equal to or larger than 500 mPa·s, and preferably equal to or larger than 700 mPa·s. With more consideration, the ink viscosity of the ink composition for writing tools under this condition is preferably equal to or larger than 1000 mPa·s.

If the ink viscosity of the ink composition for writing tools under the condition described above exceeds 30000 mPa·s, a sense of writing and initial writing performance (fading at the time of starting writing) tend to be influenced. Due to this, the ink viscosity of the ink composition for writing tools included in the stationery 10 under 20°C environment at a shear rate of 1.92 sec⁻¹ is preferably equal to or smaller than 30000 mPa s. When the viscosity is further lowered, the sense of writing and the initial writing performance (fading at the time of starting writing) are hardly influenced. Due to this, the ink viscosity of the ink composition for writing tools included in the stationery 10 under 20°C environment at a shear rate of 1.92 sec⁻¹ is preferably equal to or smaller than 10000 mPa s. Moreover, the ink viscosity of the ink composition for writing tools under the condition described above is more preferably equal to or smaller than 5000 mPa·s, and more preferably equal to or smaller than 4000 mPa·s.

The ink viscosity is measured and obtained under 20°C environment by DV-II viscometer (CPE-42 rotor) manufactured by AMETEK Brookfield.

Similarly, if surface tension of the ink composition for writing tools is smaller than 20 mN/m under 20°C environment, the ink tends to permeate the paper base material and influence of seepage of the ink tends to be caused, so that the surface tension thereof is preferably equal to or larger than 20 mN/m. With more consideration, the surface tension equal to or larger than 25 mN/m is preferable because leakage of a liquid material to the outside (ink leakage) can be suppressed.

On the other hand, if the surface tension is too high, writing performance (handwriting drying property, a blur) tends to be influenced, so that the surface tension is preferably equal to or smaller than 45 mN/m, preferably equal to or smaller than 40 mN/m, and with more consideration, the surface tension is preferably equal to or smaller than 35 mN/m.

Note that the surface tension is measured and obtained by a vertical plate method using a platinum plate by a surface tension measuring instrument manufactured by Kyowa Interface Science Co., Ltd. under 20°C environment.

The ink composition for writing tools preferably contains an ink leakage preventing agent from a viewpoint of suppressing leakage of a liquid material (ink leakage) such as the ink for writing tools housed in the stationery packaging 1 as in the present invention.

As the ink leakage preventing agent, exemplified are a resin material, an inorganic material, a pigment, and the like exhibiting an effect of suppressing ink leakage.

The ink leakage preventing agent is preferably fine particles. The fine particles indicate particles having an average particle diameter between 0.1 µm and 12 µm inclusive. The average particle diameter can be obtained by Coulter counter method.

By using the fine particles as the ink leakage preventing agent, the fine particles can control a flow of the ink composition in a gap at a writing distal end part (between a ball and an inner wall of a tip distal end) to suppress ink leakage. This is preferable from the viewpoint of suppressing leakage of a liquid material (ink leakage) such as the ink for writing tools housed in the stationery packaging 1 as in the present invention.

As the fine particles, exemplified are organic resin particles, inorganic particles, and the like, and the fine particles preferably contain organic resin particles in consideration of further suppressing leakage of a liquid material (ink leakage).

The organic resin particle has lower hardness as compared with an inorganic substance, so that it can be considered that the organic resin particles are partially deformed to be brought into intimate contact with each other, and relatively small resin particles form a weak aggregation structure to suppress ink leakage. Accordingly, the ink composition for writing tools preferably contains the organic resin particles.

As the resin particles that can obtain such an effect, exemplified are olefin-based resin particles, acrylic resin particles, acrylic ester resin particles, styrene-butadiene-based resin particles, polyester-based resin particles, vinyl acetate-based resin particles, resin particles including amino groups, and the like. Among these, it is preferable to select the resin particles from among the olefin-based resin particles, the resin particles including amino groups, and the acrylic ester resin particles, and with more consideration, the olefin-based resin particles are preferable because effects of suppressing wear of a ball seat and suppressing ink leakage at a pen point are high.

The resin particles are not particularly limited so long as they are constituted of colored resin particles, but are preferably selected from colored resin particles of thermochromic particles, photochromic particles, and fluorescence particles. In consideration of reusing the paper base material to reduce influence on the environment, the thermochromic particles and the photochromic particles are preferable, and the thermochromic particles are more preferable. The colored resin particles preferably contain microcapsules and microspheres.

As the inorganic particles, exemplified are alumina, silica, silicon carbide, boron carbide, calcium carbonate, aluminum oxide, tungsten carbide, titanium oxide, and the like. The inorganic particles are preferably selected from alumina and silica, and with more consideration, silica is preferable because effects of suppressing wear of the ball seat and suppressing ink leakage at the pen point are high.

A shape of the resin particle may be a spherical shape or an irregular shape, but a spherical resin particle is preferable in consideration of reducing friction resistance. The spherical resin particle herein is not limited to have a true spherical shape, but may be a resin particle having a substantially spherical shape, a resin particle having a substantially elliptically spherical shape, or the like.

As materials of the olefin-based resin particles, exemplified are polyolefin such as polyethylene, polypropylene, and polybutene, and mixtures thereof. Among these, it is preferable to use polyethylene in consideration of suppressing ink leakage or improving the sense of writing. Specifically, low-density polyethylene, high-density polyethylene, low-molecular polyethylene, modified polyethylene, modified high-density polyethylene, and the like are exemplified. Among these, the low-density polyethylene, the low-molecular polyethylene, and the modified polyethylene are preferable in consideration of the effect of suppressing ink leakage. The low-density polyethylene is particularly preferable because it has a lower melting point than that of other types of polyethylene and has a soft property, so that polyethylene particles are easily brought into intimate contact with each other, a gap between the particles is hardly generated, and ink leakage hardly occurs. Moreover, the low-density polyethylene is soft, so that it can be preferably used because a cushion effect between the ball and the ball seat can be easily obtained, a sense of writing can be improved, and wear of the ball seat can be suppressed. The olefin-based resin particles may contain a material other than polyolefin as needed.

For density of the olefin-based resin particles, in consideration of suppressing leakage of a liquid material (ink leakage) such as the ink for writing tools and a dispersion property of the olefin-based resin particles, a specific gravity is preferably between 900 kg/m³ and 990 kg/m³ inclusive, preferably between 910 kg/m³ and 975 kg/m³ inclusive, and preferably between 915 kg/m³ and 950 kg/m³ inclusive.

Additionally, for penetration of the olefin-based resin particles, in consideration of suppressing leakage of a liquid material (ink leakage) such as the ink for writing tools, improving the sense of writing, and suppressing wear of the ball seat, the penetration is preferably equal to or larger than 1, the penetration is preferably equal to or larger than 3, the penetration is preferably equal to or smaller than 15, and the penetration is preferably equal to or smaller than 10.

The "penetration" is a value that is measured conforming to JIS K2207.

As the resin particles including amino groups, exemplified are benzoguanamine-formaldehyde resin particles, nylon resin particles, melamine resin particles, urethane resin particles, and the like. Among these, it is preferable to use the benzoguanamine-formaldehyde resin particles particularly having a remarkable effect. The resin particles including amino groups include a hydrogen bond functional group, so that it is estimated that the effect of suppressing ink leakage can be easily obtained by forming an aggregation structure by a weak hydrogen bond.

For an average particle diameter of the resin particles, ink leakage can be more easily suppressed as the average particle diameter is smaller because the particles are brought into intimate contact with each other to easily make a weak aggregation structure. From this viewpoint, the average particle diameter of the resin particle described above is preferably equal to or smaller than 12 µm, more preferably equal to or smaller than 10 µm, and, with more consideration, more preferably equal to or smaller than 8 µm. On the other hand, if the average particle diameter is too small, the effect of suppressing ink leakage tends to be deteriorated. Due to this, the average particle diameter of the resin particles described above is preferably equal to or larger than 0.1 µm, more preferably equal to or larger than 0.5 µm, and, with more configuration, preferably equal to or larger than 1 µm, and preferably equal to or larger than 4 µm.

The average particle diameter of the resin particles can be obtained by Coulter counter method. Specifically, by using Coulter MultisizerTM3 (measurement device manufactured by Beckman Coulter, Inc.), a particle diameter (D50) is measured at the time of volume accumulation of 50% in particle size distribution that is measured based on a numerical value calibrated by using a standard sample or another measuring method. Through this measurement, the average particle diameter of the resin particles can be obtained.

Content of the resin particles with respect to the total amount of the ink composition is preferably between 0.01 mass% and 10 mass% inclusive. This because, if the content of the resin particles is smaller than 0.01 mass%, it is difficult to suppress ink leakage, and if the content of the resin particles exceeds 10 mass%, the aggregation structure tends to be strong, which may influence ink stability over time, a sense of writing, and initial writing performance. With more consideration, the content of the resin particles with respect to the total amount of the ink composition is preferably between 0.1 mass% and 5 mass% inclusive, more preferably between 0.3 mass% and 3 mass% inclusive, and most preferably between 0.5 mass% and 3 mass% inclusive.

The ink composition for writing tools preferably contains a shear-thinning agent as an ink viscosity regulator. This is because the effect of suppressing ink leakage can be easily obtained. As the shear-thinning agents, exemplified are: cross-linking acrylic acid polymer; xanthan gum, welan gum, succinoglycan, guar gum, Locust bean gum, λ-carrageenan, a cellulose derivative, diutan gum, and the like, which are exemplified as polysaccharides; and polyester-based, polyether-based, urethane-modified polyether-based, polyaminoplast-based, or alkali swelling association type thickener, a nonionic association type thickener, and the like, which are exemplified as an association type thickener depending on associative hydrophobic groups. These shear-thinning agents may be singly used, or two or more of them may be used in combination.

Among the shear-thinning agents, the polysaccharides are preferably used in consideration of the effect of suppressing ink leakage. Among the polysaccharides, xanthan gum and succinoglycan are preferably used.

In a case of using a retractable writing tool (retractable ballpoint pen) such as a knock type writing tool or a rotatably extended type writing tool, ink leakage suppression performance is one of important performance features, so that ink leakage from the gap at the writing distal end part (ink leakage from the gap between the ball and the tip distal end) is suppressed as in the present invention, which is effective.

In consideration of suppressing ink leakage from the gap at the writing distal end part (ink leakage from the gap between the ball and the tip distal end) in the writing tool, a resilient member is preferably used for the writing distal end part. The ballpoint pen is preferable because it includes a valve mechanism that presses the ball held at a tip distal end of the ballpoint pen in a rotatable manner against an inner wall of an edge of the tip distal end directly by coil spring or via a pressing body, and gives a gap between the ball and the inner wall of the edge of the tip distal end by pressing force at the time of writing to cause the ink to flow out, and ink leakage can be suppressed by closing a minute gap at the tip distal end when it is not used.

In a case of the ballpoint pen, a movement amount in a vertical axis direction of the ball of the ballpoint pen tip is preferably between 15 µm and 70 µm inclusive, which is for a water-based ballpoint pen. This is because, when the movement amount is smaller than 15 µm, favorable sense of writing and suppression of handwriting fading is difficult to be achieved, and when the movement amount exceeds 70 µm, suppression of ink leakage, ink tearing, and ink following performance tend to be influenced. With more consideration, the movement amount is preferably between 20 µm and 70 µm inclusive, with more consideration, preferably between 20 µm and 55 µm inclusive, and preferably between 25 µm and 45 µm inclusive.

In a case of an oil-based ballpoint pen, the movement amount is preferably between 3 µm and 25 µm inclusive. This is because, when the movement amount is smaller than 3 µm, favorable sense of writing and suppression of handwriting fading is difficult to be achieved, and when the movement amount exceeds 25 µm, suppression of ink leakage, ink tearing, and ink following performance tend to be influenced. With more consideration, the movement amount is preferably between 3 µm and 20 µm inclusive, and, with more consideration, the movement amount in the vertical axis direction described above is preferably between 5 µm and 16 µm inclusive.

### (Method for manufacturing stationery packaging)

The stationery packaging 1 can be manufactured by the following manufacturing method, for example.

A pair of the paper base materials 2 with a rectangular shape is prepared. The window part 9, the decorative region 7, the hanging hole 8, and the like may be provided in the paper base material 2.

For each of the paper base materials 2, the heat seal layer 4 is formed on the paper base material 2 by coating, with a heat seal dispersion liquid, and drying peripheral edges of four sides of the rectangular shape on a surface to be opposed to the other surface when the stationery packaging 1 is configured. Then, the pair of paper base materials 2 are overlapped such that the surfaces on which the heat seal layers 4 are formed face each other, and the stationery 10 is placed between the pair of paper base materials 2. By heating and press-bonding the regions where the heat seal layers 4 are provided on the peripheral edges of a laminated body of the pair of paper base materials 2 in which the stationery 10 is placed, the stationery packaging 1 the four sides of which are fused is made while the stationery 10 is housed in the inside stationery housing part 5. The hanging hole 8 may be provided after the four sides are fused.

The stationery packaging 1 may be made by using the one paper base material 2. For example, the one paper base material 2 with a rectangular shape is prepared. The window part 9, the decorative region 7, the hanging hole 8, and the like may be provided in the paper base material 2.

The heat seal layer 4 is then provided at least in a region to be fused at least on one of the front surface and the back surface of the one paper base material 2. In detail, the heat seal layer 4 is provided along peripheral edges constituting the four sides of the rectangular shape at least on one of the front surface and the back surface of the paper base material 2 having the rectangular shape. By bending the paper base material 2 on which the heat seal layer 4 is formed in a cylindrical shape or folding it back at the center such that the surface on which the heat seal layer 4 is formed becomes an inner side, placing the stationery 10 inside, and heating and press-bonding the regions in which the heat seal layer 4 is provided on opened three sides, the stationery packaging 1 the three sides of which are fused is made while the stationery 10 is housed in the inside stationery housing part 5. At least one of the hanging hole 8 and the window part 9 may be provided after the three sides are fused.

The stationery 10 housed in the stationery housing part 5 is preferably positioned at a substantially central part of the stationery housing part 5 so as to enhance an appearance of the stationery packaging 1 when being hung to be displayed on the display stand and the like. Thus, it is preferable to adjust a formation region and a fused region of the heat seal layer 4 such that the stationery 10 is placed at the substantially central part of the stationery housing part 5.

As described above, the stationery packaging 1 according to the present embodiment is capable of housing the stationery 10 and includes the paper base material 2 and the heat seal layer 4 provided on the paper base material 2.

The stationery packaging 1 according to the present embodiment can be the stationery packaging 1 that reduces influence on the environment and is friendly to the global environment by using the paper base material 2. With the paper base material 2, the stationery 10 can be tried out (for example, test writing, test painting, and the like can be performed with the stationery 10) differently from a film material, so that an effect of enabling effective use of the paper base material 2 can be exhibited.

The stationery packaging 1 according to the present embodiment includes the heat seal layer 4. By using the heat seal layer 4 to seal the stationery packaging 1 by fusing, it is possible to suppress leakage of a liquid material such as ink for writing tools included in the stationery 10 contained in the stationery packaging 1 to the outside (ink leakage).

Thus, the present embodiment can provide the stationery packaging 1 that reduces influence on the environment, and suppresses leakage of a liquid material such as ink for writing tools to the outside (ink leakage).

Additionally, the stationery packaging 1 according to the present embodiment can be easily packaged or opened.

### (Contribution to Sustainable Development Goals (SDGs) led by United Nations)

According to the present embodiment, it is possible to provide the stationery packaging 1 that reduces influence on the environment and is friendly to the global environment, so that it is possible to contribute to the goals 12, 13, 14, and 15 of SDGs.

### Practical Examples

The following specifically describes the present invention with practical examples, but the present invention is not limited to these examples.

### (Manufacture of stationery packaging)

First, a biodegradable plastic (aliphatic polyester resin: poly-3-hydroxybutyrate-3-hydroxyhexanoate), an adhesive agent (fully saponified polyvinyl alcohol), and water were mixed to make a heat seal dispersion liquid. Thereafter, one surface of the paper base material 2 (a thickness of the paper base material: 80 µm, cup base paper having a basis weight of 200 g/m², Oken smoothness: 55 seconds), on which the hanging hole 8 and the window part 9 (through which a grip part of a writing tool was able to be visually recognized, blue) were provided, was coated with the heat seal dispersion liquid as the heat seal layer 4 on four sides of end parts of the paper base material as a region to be the fused region 3 by a bar blade method such that a coating amount becomes 20.0 g/m² as a dry weight, and the heat seal layer 4 was dried at 130°C to obtain the stationery packaging 1 (length 200 mm × width 50 mm).

Note that, in the present specification, the Oken smoothness of the paper base material 2 was measured by using Digital Oken Type Air-permeability & Smoothness tester (manufactured by ASAHI SEIKO CO., LTD.) conforming to JIS P8155.

### Practical Example 1

A writing tool (thermochromic ballpoint pen; blue ink) was housed as the stationery 10 using a thermochromic ink composition, in the stationery housing part 5 of the stationery packaging 1 manufactured as described above, heat sealing was performed by heating and press-bonding the heat seal layer 4 formed on the four sides of the end parts as a region to be the fused region 3 on an inner surface of the paper base material, and the stationery packaging 1 having a rectangular external shape was obtained.

On the surface of the stationery packaging 1, the decorative region 7 decorated with a commodity name and commodity features by printing was provided. In a state where the stationery 10 is housed in the stationery housing part 5 at the central part, an area of the covering decorative region 7A covering the stationery 10 housed in the stationery housing part 5 in the decorative region 7 was 33% of a projection area of the stationery 10 housed in the stationery housing part 5 (the area of the covering decorative region 7A: 5 cm², the projection area of the stationery 10: 15 cm²).

The projection area of the stationery 10 was 30% of an area of parallel projection of the stationery packaging 1 in the thickness direction of the paper base material 2 (the projection area of the stationery 10: 15 cm², the area of parallel projection of the stationery packaging 1 in the thickness direction of the paper base material 2: 50 cm²).

The volume of the stationery 10 was 67% of the volume of the stationery housing part 5 of the stationery packaging 1 (the volume of the stationery 10: 20 cm³, the volume of the stationery housing part 5: 30 cm³).

Through the window part 9, the grip part of the stationery 10 in the stationery housing part 5 was able to be visually recognized to be blue, and a color of the ink for the writing tool was able to be discriminated.

A knock type thermochromic ballpoint pen (stationery including thermochromic ink) was used as the stationery 10 housed in the stationery housing part 5. Specifications of this knock type thermochromic ballpoint pen were as follows.
Ink viscosity: 1000 mPa·s, surface tension: 30 mN/m
Ink composition: containing microcapsule pigments (colored resin particles, average particle diameter: 1.5 µm), and xanthan gum (shear-thinning agent)
Movement amount in vertical axis direction of ball of ballpoint pen tip: 50 µm
Ballpoint pen tip: including a coil spring (resilient member) that presses the ball directly against the inner wall of the edge of the tip distal end in the tip

### Practical Example 2

Similarly to the practical example 1, the stationery packaging 1 was obtained by using the same method as the practical example 1, with the exception that a knock type oil-based ballpoint pen using an oil-based ink composition was housed instead of the knock type thermochromic ballpoint pen in the stationery housing part 5 of the stationery packaging 1 manufactured as described above.

### Specifications of knock type oil-based ballpoint pen

Ink viscosity: 4000 mPa·s
Ink composition: containing acrylic ester resin particles (average particle diameter: 0.8 µm)
Movement amount in vertical axis direction of ball of ballpoint pen tip: 12 µm
Ballpoint pen tip: including a coil spring (resilient member) that presses the ball directly against the inner wall of the edge of the tip distal end in the tip

In a state where the knock type oil-based ballpoint pen described above was housed in the stationery housing part 5 as the stationery 10, a printing pattern was formed such that the area of the covering decorative region 7A becomes 50% of the projection area of the knock type oil-based ballpoint pen.

Ratio of projection area of knock type oil-based ballpoint pen to area of parallel projection of stationery packaging 1 in thickness direction of paper base material 2: 25%

Ratio of volume of knock type oil-based ballpoint pen to volume of stationery housing part 5: 50%

### Practical Example 3

Similarly to the practical example 1, the stationery packaging 1 was obtained by using the same method as the practical example 1, with the exception that a water-based gel ink ballpoint pen using a water-based ink composition to which a shear-thinning property is given is housed in the stationery housing part 5 of the stationery packaging 1 manufactured as described above.

### Specifications of knock type water-based gel ink ballpoint pen

Ink viscosity: 2000 mPa·s, surface tension: 35 mN/m,
Ink composition: containing polyethylene particles (average particle diameter: 6 µm, density: 920 kg/m³), and xanthan gum (shear-thinning agent)
Movement amount in vertical axis direction of ball of ballpoint pen tip: 30 µm
Ballpoint pen tip: including a coil spring (resilient member) that presses the ball directly against the inner wall of the edge of the tip distal end in the tip

In a state where the knock type water-based gel ink ballpoint pen described above was housed in the stationery housing part 5 as the stationery 10, a printing pattern was formed such that the area of the covering decorative region 7A becomes 47% of a projection area of the knock type water-based gel ink ballpoint pen.

Ratio of projection area of knock type water-based gel ink ballpoint pen to area of parallel projection of stationery packaging 1 in thickness direction of paper base material 2: 35%

Ratio of volume of knock type water-based gel ink ballpoint pen to volume of stationery housing part 5: 75%

### Practical Example 4

Similarly to the practical example 1, the stationery packaging 1 was obtained by using the same method as the practical example 1, with the exception that the oil-based ballpoint pen for which the oil-based ink composition and the tip specifications were changed as follows was housed instead of the knock type thermochromic ballpoint pen, in the stationery housing part 5 of the stationery packaging 1 manufactured as described above.

### Specifications of knock type oil-based ballpoint pen

Ink viscosity: 3000 mPa·s
Ink composition: containing acrylic ester resin particles (average particle diameter: 1.5 µm)
Movement amount in vertical axis direction of ball of ballpoint pen tip: 7 µm
Ballpoint pen tip: including a coil spring (resilient member) that presses the ball directly against the inner wall of the edge of the tip distal end in the tip

In a state where the knock type oil-based ballpoint pen described above was housed in the stationery housing part 5 as the stationery 10, a printing pattern was formed such that the area of the covering decorative region 7A becomes 50% of the projection area of the oil-based ballpoint pen.
Ratio of projection area of knock type oil-based ballpoint pen to area of parallel projection of stationery packaging 1 in thickness direction of paper base material 2: 40%
Ratio of volume of knock type oil-based ballpoint pen to volume of stationery housing part 5: 50%

### Practical Example 5

Similarly to the practical example 1, the stationery packaging was obtained by using the same method as the practical example 1, with the exception that the knock type water-based gel ink ballpoint pen for which the oil-based ink composition and the tip specifications were changed as follows was housed, instead of the knock type thermochromic ballpoint pen, in the stationery housing part 5 of the stationery packaging 1 manufactured as described above.

### Specifications of knock type water-based gel ink ballpoint pen

Ink viscosity: 1800 mPa s, surface tension 32 mN/m,
Ink composition: containing polyethylene particles (average particle diameter: 6 µm, penetration: 10, density: 920 kg/m³), and xanthan gum (shear-thinning agent)
Movement amount in vertical axis direction of ball of ballpoint pen tip: 25 µm
Ballpoint pen tip: including a coil spring (resilient member) that presses the ball directly against the inner wall of the edge of the tip distal end in the tip

In a state where the knock type water-based gel ink ballpoint pen described above was housed in the stationery housing part 5, a printing pattern was formed such that the area of the covering decorative region 7A becomes 60% of the projection area of the knock type water-based gel ink ballpoint pen.

Ratio of projection area of knock type water-based gel ink ballpoint pen to area of parallel projection of stationery packaging 1 in thickness direction of paper base material 2: 50%

Ratio of volume of knock type water-based gel ink ballpoint pen to volume of stationery housing part 5: 50%

### Practical Example 6

Similarly to the practical example 1, the stationery packaging was obtained by using the same method as the practical example 1, with the exception that the water-based gel ink ballpoint pen for which the oil-based ink composition and the tip specifications were changed as follows was housed, instead of the knock type thermochromic ballpoint pen, in the stationery housing part 5 of the stationery packaging 1 manufactured as described above.

### Specifications of knock type water-based gel ink ballpoint pen

Ink viscosity: 3500 mPa·s, surface tension 25 mN/m,
Ink composition: containing benzoguanamine-formaldehyde condensate resin particles (average particle diameter: 5 µm), and succinoglycan (shear-thinning agent)
Movement amount in vertical axis direction of ball of ballpoint pen tip: 40 µm
Ballpoint pen tip: including a coil spring (resilient member) that presses the ball directly against the inner wall of the edge of the tip distal end in the tip

In a state where the knock type water-based gel ink ballpoint pen described above was housed in the stationery housing part 5, a printing pattern was formed such that the area of the covering decorative region 7A becomes 40% of the projection area of the knock type water-based gel ink ballpoint pen.

Ratio of projection area of knock type water-based gel ink ballpoint pen to area of parallel projection of stationery packaging 1 in thickness direction of paper base material 2: 30%

Ratio of volume of knock type water-based gel ink ballpoint pen to volume of stationery housing part 5: 65%

### Practical Example 7

Similarly to the practical example 1, the stationery packaging was obtained by using the same method as the practical example 1, with the exception that the oil-based ink ballpoint pen (refill) for which the oil-based ink composition and the tip specifications were changed as follows was housed instead of the knock type thermochromic ballpoint pen, in the stationery housing part 5 of the stationery packaging 1 manufactured as described above.

### Specifications of knock type oil-based ballpoint pen

Ink viscosity: 2000 mPa·s
Ink composition: containing silica particles (average primary particle diameter: 0.016 µm)
Movement amount in vertical axis direction of ball of ballpoint pen tip: 7 µm
Ballpoint pen tip: including a coil spring (resilient member) that presses the ball directly against the inner wall of the edge of the tip distal end in the tip

In a state where the knock type oil-based ballpoint pen described above was housed in the stationery housing part 5, a printing pattern was formed such that the area of the covering decorative region 7A becomes 30% of the projection area of the knock type oil-based ballpoint pen.

Ratio of projection area of knock type oil-based ballpoint pen to area of parallel projection of stationery packaging 1 in thickness direction of paper base material 2: 20%

Ratio of volume of knock type oil-based ballpoint pen to volume of stationery housing part 5: 20%

### Practical Example 8

Similarly to the practical example 1, the stationery packaging was obtained by using the same method as the practical example 1, with the exception that the water-based gel ink ballpoint pen (refill) for which the oil-based ink composition and the tip specifications were changed as follows was housed, instead of the knock type thermochromic ballpoint pen, in the stationery housing part 5 of the stationery packaging 1 manufactured as described above.

### Specifications of knock type water-based gel ink ballpoint pen

Ink viscosity: 3500 mPa·s, surface tension 25 mN/m,
Ink composition: containing nylon resin particles (average particle diameter: 5 µm), and succinoglycan (shear-thinning agent)
Movement amount in vertical axis direction of ball of ballpoint pen tip: 40 µm
Ballpoint pen tip: including a coil spring (resilient member) that presses the ball directly against the inner wall of the edge of the tip distal end in the tip

In a state where the knock type water-based gel ink ballpoint pen described above was housed in the stationery housing part 5, a printing pattern was formed such that the area of the covering decorative region 7A becomes 30% of the projection area of the knock type water-based gel ink ballpoint pen.

Ratio of projection area of knock type water-based gel ink ballpoint pen to area of parallel projection of stationery packaging 1 in thickness direction of paper base material 2: 25%

Ratio of volume of knock type water-based ballpoint pen to volume of stationery housing part 5: 80%

The stationery packaging 1 housing the stationery 10 each manufactured in the practical examples 1 to 8 was free of cracks, pinholes, and creases, and was able to be easily packaged and opened.

Moreover, even when the stationery packaging 1 housing the stationery 10 each manufactured in the practical examples 1 to 8 was dropped onto the ground from a height of 1 m, damage of the stationery packaging 1 or leakage of the ink for writing tools were not caused, which was favorable.

The stationery packaging 1 was the paper base material 2, so that test writing was performed on the paper base material 2 using the stationery 10 in the practical examples 1 to 8, and the paper base material 2 was able to be effectively used without using the other paper base material 2. Due to this, the paper base material 2 was able to be reduced, and influence on the environment was able to be reduced.

In this way, by using the paper base material 2 and the heat seal layer 4 that is made from a bioplastic, instead of a packaging made from plastic film, it is possible to provide the stationery packaging 1 that reduces influence on the environment and is friendly to the global environment.

Moreover, regarding the stationery 10 housed in the stationery packaging 1, it is preferable to select a component constituting the stationery 10 to be housed and sold from among stationery at least including a bioplastic material and a recycled material, and thermochromic stationery including thermochromic ink because influence on the environment can be further reduced.

### EXPLANATIONS OF LETTERS OR NUMERALS

1 stationery packaging
2 paper base material
3 fused region
4 heat seal layer
5 stationery housing part
7 decorative region
7A covering decorative region
8 hanging hole
9 window part
10 stationery

### INDUSTRIAL APPLICABILITY

The present invention can be used as a stationery packaging housing stationery, and more specifically, can be widely used as a stationery packaging and the like that houses writing tools such as a ballpoint pen, a marking pen, a fountain pen, extra refills, a pencil, a mechanical pencil, and extra lead refills for a mechanical pencil, and stationery such as an eraser, a stamp, glue, tape, and a ruler.

## Claims

1. A stationery packaging capable of housing stationery, the stationery packaging comprising:
a paper base material; and
a heat seal layer provided on the paper base material.

2. The stationery packaging according to claim 1, wherein the heat seal layer is provided at least on one of a front surface and a back surface being two opposed surfaces of the paper base material.

3. The stationery packaging according to claim 1 or 2, wherein
the paper base material is formed in a bag shape in which a surface of the paper base material where the heat seal layer is provided is an inner peripheral surface being partially fused, and
the heat seal layer is provided at least in a fused region fused in the paper base material.

4. The stationery packaging according to any one of claims 1 to 3, wherein
the stationery packaging
is formed in a bag shape in which a surface of the paper base material where the heat seal layer is provided is an inner peripheral surface being partially fused, and
includes a decorative region whose outer peripheral surface is decorated, and
an area of a covering decorative region covering the stationery housed in a stationery housing part is equal to or smaller than 70% of a projection area obtained by parallel projection of the stationery housed in the stationery housing part on the outer peripheral surface, the stationery housing part being an inner space of the bag-shaped stationery packaging and configured to house the stationery.

5. The stationery packaging according to any one of claims 1 to 4, wherein a projection area of the stationery is equal to or larger than 20% of an area of parallel projection of the stationery packaging in a thickness direction of the paper base material.

6. The stationery packaging according to any one of claims 1 to 5, wherein the heat seal layer contains a bioplastic.

7. The stationery packaging according to any one of claims 1 to 6, wherein the stationery includes at least a bioplastic material and a recycled material as components constituting the stationery.

8. The stationery packaging according to any one of claims 1 to 7, wherein the stationery is thermochromic stationery including thermochromic ink.

9. The stationery packaging according to any one of claims 1 to 8, wherein the stationery is a writing tool.

10. The stationery packaging according to claim 9, wherein ink viscosity of an ink composition for writing tool housed in the writing tool is equal to or smaller than 30000 mPa·s under 20°C environment at a shear rate of 1.92 sec⁻¹.

11. The stationery packaging according to claim 9 or 10, wherein the ink composition for writing tool housed in the writing tool contains an ink leakage preventing agent.
